# EUROPEAN PATENT APPLICATION

(11) **EP 3 907 035 A1**
(43) Date of publication of application: **10.11.2021**
(21) Application number: 19921204.4
(22) Date of filing: 16.05.2019
(51) Int. Cl.: B23K 26/50, C01B 32/28

(54) **METHOD FOR CREATING AND DETECTING AN OPTICALLY PERMEABLE IMAGE INSIDE A DIAMOND**

(30) Priority: 26.03.2019 RU 2019108757
(71) Applicant: Joint Stock Company «Alrosa» (Public Joint Stock Company) (PJSC Alrosa), G. Mirny, 678175, Republic of Sakha (Yakutia) (RU)
(72) Inventor: IONIN, Andrey Alekseevich, Moscow, 117335 (RU); KUDRYASHOV, Sergey Ivanovich, Moskovskaya obl., 141207 (RU); SMIRNOV, Nikita Aleksandrovich, Moscow, 117279 (RU); DANILOV, Pavel Aleksandrovich, Kurskaya obl., 307170 (RU); LEVCHENKO, Aleksey Olegovich, Moskovskaya obl., 144012 (RU)
(74) Representative: Plasseraud IP
(86) International application number: PCT/RU2019/000343
(87) International publication number: WO 2020/197432

(57) **Abstract**

The invention relates to methods for creation of images inside diamonds that carry information for various purposes, for example, an identification code, marks identifying diamonds. The technical problem of the claimed invention is to eliminate the disadvantages of the prototype, namely, increasing the reliability of creation of the optically permeable image inside the diamond and subsequent detection of the image, with simplifying the process of creation of the image, therefore achieving a technical result consisting in increasing the accuracy of creation of the optically permeable image inside the diamond and detection thereof. Said technical result is achieved in a method for creation of the optically permeable image inside the diamond, in which the image is created under the surface of the diamond and consisting of a given set of optically permeable elements of micron or submicron size, which are disturbances in the periodicity of the diamond crystal structure, wherein the image created in the diamond is a mark consisting of the given set of optically permeable elements of micron or submicron size, which are disturbances in the periodicity of the diamond crystal structure with the participation of chemical elements of impurities formed at vacancies and interstitials in the volume of micron or submicron size, and wherein the formation of disturbances in the periodicity of the diamond crystal structure is made by treatment of the diamond with optical radiation focused in the focal region located in the area of the expected location of disturbances in the periodicity of the diamond crystal structure, with supplying ultrashort radiation pulses providing the formation of the given set of optically permeable elements of micron or submicron size formed at vacancies and interstitials, in the specified focal region, providing an integrated fluence below the threshold fluence, at which the local transformation of the diamond into graphite or other non-diamond form of carbon occurs, or cracks, splits are formed in the crystal, in the specified focal region. Said technical result is also achieved in methods for detection the optically permeable image inside the diamond by local rotation of polarization of light, and also in a method for detection of the optically permeable image inside the diamond by combinational (Raman) scattering distortion or by local distortion of the luminescence spectra of natural impurities, and also in systems performing detection by these methods. 4 i.c. 13 d.c. 4 ill.

## Description

The present invention relates to methods for recording information in diamonds, more specifically to methods for creation of images inside diamonds that carry information for various purposes, for example, known only to a small circle of people, such as identification codes, marks identifying diamonds, in particular, to methods for creation of an optically permeable image inside a diamond, which image is invisible to the naked eye, using magnifying glasses and microscopes of various types, inside faceted and uncut natural diamonds or synthetic diamonds without affecting their absorption characteristics, resulting in damage to the quality of the diamonds.

The problem of creating images in the volume of diamond, for example, for marking diamonds in order to identify and track them, without prejudice to their quality and, consequently, cost, is well known, since some properties of diamonds make creation of such images very difficult.

It is known that diamonds are optically transparent for wavelengths in the visible spectrum in the range 400-700 nm, that diamond is a material of very high hardness, prone to cracking under severe mechanical stress or excessive local heating, and therefore, mark images, preferably in the form of readable codes, samples, serial numbers, and sequences of alphanumeric characters must be very small and inaccessible to mechanical and chemical effects, in order to avoid unauthorized detection or removal, but must not alter the appearance and commercial value of the diamond.

Various methods are known for applying images to a surface of the faceted diamond. However, facets of the faceted diamond surface are oriented in different directions, have very small dimensions, and may not be accessible for marking and detection if the gemstone is inserted into the frame. In addition, the original surface marks can be destroyed by mechanical and chemical treatment, for example, polishing, etching. Therefore, it is preferable, especially for expensive diamonds, to create marking images under the surface layer of diamond without changing the outer surface.

The creation of two- and three-dimensional images in the volume of diamond is a promising technology both for the purpose of storing information and for use in optical technology.

Methods are known for creation of images in native diamonds in the form of marks that are opaque to optical radiation due to the development of the volume of disturbed diamond microstructures surrounding natural impurities, for example, a variety of structural defects and impurities invisible to the naked eye, most of which are nitrogen, hydrogen, and boron atoms, or due to the incorporation of impurity ions, for example, phosphorus, creating detectable defective regions in the diamond structure.

A method and system is known for laser marking of diamonds (RU 2357870 CI; WO 2006/092035; US 7284396 B1), comprising engraving authentication codes in the form of marks in the diamond volume, created by exposure to a controlled train of laser pulses in the femtosecond range (from several femtoseconds up to 200 picoseconds), with the energy carried by each laser pulse above the threshold energy required to cause permanent structural changes (damage) in the diamond crystal at a selected laser wavelength and focusing characteristics initiated by defects or impurities (nitrogen, hydrogen, sulfur, phosphorus, nickel, boron atoms, and others) present in the bulk of the material, wherein the recording laser beam reaches its smallest transverse size or, equivalently, its maximum integrated optical flux density. In this case, the radiation is produced by pulses focused below the surface and resulting in the formation, in places of random distribution of said defects, of growing defective microstructures that are not transparent to optical radiation. The mark signs consist of non-diamond forms of carbon and are formed from several microscopic point marks having a size of several micrometers (2-5 µm) with a distance between adjacent point marks of about 50 µm, and wherein the array of point marks has an area of 250 × 250 µm, and require the use of a special detection device for readout. However, at the same time:
- created point marks are larger than natural defects in diamond, thereby deteriorating the quality and commercial value of diamonds;
- the mutual arrangement of the points in the mark can determine only some geometric combination thereof, for example, the vertices of a virtual triangle based on three points, but not the image of the triangle itself;
- stone authentication based on the mutual spatial arrangement of the point marks therein created in the rough diamond cannot be reliable after its faceting, when the position of the part of the point marks relative to the facets and between them can be changed;
- due to a stochastic arrangement of natural defects in diamond, the creation of miniature images having a visual and semantic charge is impossible.

A method of obtaining images in transparent materials is known (SU 329899 A), in which a latent image was created in transparent diamond plates cut from natural diamond octahedra and having dimensions of 50 × 50 mm and a thickness of 300 µm. A metal mask with a thickness of 50 µm was applied onto the surface of such a sample, wherein the required image had been etched in the mask using photolithography, after which the sample was bombarded with phosphorus ions. In such a case, in addition to the color surface image, an internal image appeared, and then the plates were subjected to subsequent thermal annealing, as a result of which the color image disappeared. The formed image was thermally stable up to 1200 °C, not destroyed by the action of light, electric and magnetic fields. However, due to the high lattice hardness, the depth of penetration of phosphorus ions into the diamond and the depth of the internal image placement cannot be large, therefore, a thin surface layer containing a mark can be removed by polishing or etching, and also an increase in the amount of phosphorus impurities in the diamond and the presence of a visually distinguishable image affects its commercial value.

A method of incorporation of a manufacturing mark or identification mark into a single-crystal diamond obtained by chemical vapor deposition from a gas (vapor) phase on a diamond substrate base, in which the surface where the diamond grows, is mainly free from crystal defects (RU 2382122 C1) is known, wherein at least one dopant of a chemical element from the group comprising nitrogen, boron, and silicon is incorporated in the layer of synthetic diamond material during the synthesis in the form of defective centers that emit radiation with a characteristic wavelength upon excitation. In this case, nitrogen can be introduced into synthetic plasma in various forms, usually N₂, NH₃, air, and N₂H₄, and forms a production mark or identification mark in the form of a layer in which fluorescence with peaks of 575 nm and/or 637 nm occurs upon appropriate optical excitation. This fluorescence is quenched, essentially instantly when the excitation source is removed. In this layer containing doping nitrogen, a photoluminescence line at 533 nm can also be observed. Preferably, the manufacturing mark or identification mark is in the form of one or more layers or regions introduced into the diamond material during the synthesis: for example, the shape of the manufacturing mark or identification mark, such as a trademark, can be one or more sets of characteristic layers periodically distributed in diamond layer, item or synthetic gemstone. Recognition (detection) of the production mark or identification mark can be carried out, for example, visually or using special optical devices. In general, it is preferable that observer recognizes it directly with the naked eye, since this method allows to obtain spatial information, in particular binocular or in-depth information.

In addition, it is well known that the capture of impurities varies depending on the growth sector involved in this process, for example, the growth sector {111} often captures a higher concentration of impurities than the growth sector {100}.

However, in this method of marking synthetic grown diamonds, a known defect is introduced into the diamond, which does not improve the quality of the diamond, and due to the randomness of the placement of such defects in the diamond during its synthesis, set of such introduced defects cannot compose any image containing the specified elements.

In addition, this method is a method of growing diamond with a given mark and cannot be used for marking natural diamonds or artificial diamonds grown using other technologies.

Marks containing diamond nanocrystals with active centers fluorescent under external radiation are known to be used in article protection methods: NV centers (RU 2357866 C1) or N-E8 centers (RU 2386542 C1) obtained by exposing diamond nanocrystals to an electron or ion beam with subsequent annealing at high temperature, which results in the formation of NV centers or N-E8 centers located randomly in the entire volume of the nanocrystal. Then, nanocrystals containing said optically active centers are introduced into the article, and the authenticity of the article is judged by the presence of the fluorescence effect of the nanocrystals in the article upon exciting optical irradiation.

It is known that the detection of such fluorescence radiation of NV centers (RU 2357866 C1) can be carried out in a device containing an optical excitation source with a wavelength in the range of 500-550 nm, for example, by radiation of the second harmonic of a yttrium-aluminum garnet laser (532 nm), which activates the NV centers and causes fluorescence thereof, and a photo detector tuned up to wavelengths in the range of 630-800 nm, which analyzes the spectral and temporal characteristics of the fluorescence signal obtained.

At the same time, the conclusion about the presence of such a mark in the article is made on the basis of the spectral characteristics of fluorescence corresponding to the known spectral characteristics of the fluorescence of the NV center and the difference in the fluorescence signal when simultaneously excited with and without a resonant microwave field, which indicates the presence of a diamond having the NV centers in the article.

However, the presence of such diamond nanocrystals in the article can only be detected as a kind of fluorescent spot in the area containing said nanocrystals.

The closest analogue is a method for creation of an optically permeable image inside a diamond and a device for detection thereof (RU2465377), which is based on the fact that inside the diamond, in an area free of optically impermeable inhomogeneities, an image is created consisting of a given set of optically permeable elements of micron or submicron size which are clusters of NV centers fluorescent upon exciting irradiation, while the formation of clusters of NV centers is carried out by performing the following operations: treatment of the diamond with working optical radiation focused in the focal region located in the area of the expected location of the cluster of NV centers, with the supply of working ultrashort radiation pulses, providing the formation of a cluster of vacancies in the specified focal region and at the same time providing in the specified focal region an integral fluence below the threshold fluence at which the local transformation of diamond into graphite or other non-diamond form of carbon occurs; annealing at least the specified areas of the expected location of clusters of NV centers, which provides a drift of created vacancies in these areas and the formation of NV centers grouped in clusters in the same areas as vacancy clusters; control of the created image elements based on the registration of fluorescence of NV centers upon irradiation of at least the areas of the image elements by exciting optical radiation providing excitation of NV centers; forming of a digital and/or three-dimensional model of the created image. Images created in diamond crystals from clusters of NV centers are invisible to the naked eye, through magnifying glasses, and also with optical or electronic microscopes of any type.

However, this method is time-consuming, and may also result in deterioration in the quality of diamonds, due to the annealing process. In addition, in the case of a high concentration of impurities in the diamond, the so-called concentration quenching of luminescence can be observed, which entails a poor quality of image detection.

The technical problem of the claimed invention is to eliminate the disadvantages of the prototype, namely, increasing the reliability of creation of an optically permeable image inside a diamond and subsequent detection thereof, with simplifying the process of creation of the image, therefore achieving a technical result consisting in increasing the accuracy of creation of the optically permeable image inside the diamond and detection thereof.

Said technical result is achieved in the method for creation of an optically permeable image inside a diamond, in which the image is created under the diamond surface, which image consists of a given set of optically permeable elements of micron or submicron size, which are disturbances in the periodicity of the diamond crystal structure, wherein the image is created in the diamond, which image is a mark consisting of the given set of optically permeable elements of micron or submicron size, which are disturbances in the periodicity of the diamond crystal structure with the participation of chemical elements of impurities formed at vacancies and interstitials in the volume of micron or submicron size, and wherein the formation of disturbances in the periodicity of the diamond crystal structure is carried out by treatment of the diamond with optical radiation focused in the focal region located in the area of the expected distribution of disturbances in the periodicity of the diamond crystal structure, with the supply of ultrashort radiation pulses providing the formation of the given set of optically permeable elements of micron or submicron size made at vacancies and interstitials in the specified focal region, providing an integrated fluence in the specified focal region below the threshold fluence at which the local transformation of diamond into graphite or another non-diamond form of carbon occurs, or cracks, splits are formed in the crystal.

An additional feature is that before treatment of the diamond with said optical radiation, its surface is cleaned of impurities and an immersion composition is applied, selected in such a way that refractive index thereof is close to the refractive index of diamond in the wavelength range close to the wavelength of the laser used.

An additional feature is that the immersion composition is applied to both treated and untreated diamond.

An additional feature is that a marking system is used to create an optically permeable image inside a diamond, which system comprises a laser generating working radiation in the form of a train of pulses, a focusing subsystem configured to create a focal waist of the radiation beam inside the diamond volume, and a subsystem for moving configured to move along three spatial coordinates.

An additional feature is that the radiation in the form of ultrashort laser pulses of duration of 30 fs to 10 ps, energy from 1 nJ to 40 µJ, and a wavelength of 240 to 1800 nm is used as the working radiation.

An additional feature is that said system comprises an optical radiation source that provides exciting radiation with a wavelength of from 240 to 600 nm as a source of exciting radiation.

An additional feature is that an image element having size in the range from 0.5 to 20.0 µm at a depth of more than 100 µm is created, wherein radiation in the form of ultrashort laser pulses focused in the focal region having dimensions in the range from 0.5 to 20.0 µm, respectively, is used for treatment.

Said technical result is also achieved in a method for detection of an optically permeable image inside a diamond by local rotation of polarization of light, which consists in generating non-polarized backlight radiation; converting said radiation to a linearly polarized one, which is passed through the diamond, mounted on a subsystem for moving; carrying out the rotation of the polarization of the backlight radiation; converting the resulting radiation coming out of diamond and having a polarization other than linear, due to local stresses of the crystal lattice caused by the presence of disturbances in the periodicity of the diamond crystal structure, to a linearly polarized one; building an image on the sensor of the matrix from the previously created set of optically permeable elements of micron or submicron size, which are disturbances in the periodicity of the diamond crystal structure with the participation of chemical elements of impurities formed at vacancies and interstitials in the volume of micron or submicron size; decoding the information encoded in the given set of optically permeable elements of micron or submicron size in the diamond; forming of an image on the basis of the information obtained.

Said technical result is also achieved in a method for detection an optically permeable image inside a diamond by combinational (Raman) scattering distortion or by local distortion of the luminescence spectra of natural impurities, which consists in generating exciting radiation; focusing said radiation inside the diamond mounted on a subsystem for moving into a focal waist, the transverse dimension of which is of the order of the transverse size of the previously created image; collimating the part of the scattered radiation emitted by the optically permeable elements of micron or submicron size in the diamond, which are disturbances in the periodicity of the diamond crystal structure with the participation of chemical elements of impurities, formed at vacancies and interstitials in the volume of micron or submicron size; tuning a wavelength selective device in such a way that radiation scattered by the unperturbed part of the diamond does not pass through it, or tuning to the wavelength of the natural (naturally occurring) impurity present in the given diamond; registering the radiation obtained; moving the diamond mounted on the subsystem for moving while scanning in a plane perpendicular to the optical axis; mapping the image obtained after scanning; decoding the information encoded in a given set of optically permeable elements of micron or submicron size in the diamond; forming of an image on the basis of the information obtained.

Said technical result is also achieved in a system for detection of an optically permeable image inside a diamond, which system comprises a radiation source, an imaging subsystem, a decoding subsystem, a subsystem for moving of the diamond, wherein the detection system detects the optically permeable image inside the diamond by local rotation of polarization of light when previously created image consisting from a given set of optically permeable elements of micron or submicron size, which are disturbances in the periodicity of the diamond crystal structure with the participation of chemical elements of impurities formed at vacancies and interstitials in the volume of micron or submicron size, is exposed to polarized radiation, wherein the radiation source is configured to generate non-polarized radiation, and the system additionally comprises: the first polarizer that converts the radiation received from the radiation source to a linearly polarized radiation; an objective lens; the second polarizer that converts radiation received from disturbances in the periodicity of the diamond crystal structure with the participation of chemical elements of impurities formed at vacancies and interstitials in the volume of micron or submicron size in the diamond and having components with a polarization other than linear, to a linearly polarized one, and also configured to rotate around the optical axis of the system; a subsystem for moving the diamond that implements moving along three spatial coordinates, and also rotating around three spatial axes.

An additional feature is that a lamp with a condenser can be used as a source of backlight radiation.

An additional feature is that, depending on the angle of rotation of the second polarizer, the areas of the defect clusters are displayed on the sensor as darker or brighter regions.

Said technical result is also achieved in a system for detection of an optically permeable image inside a diamond, which system comprises a radiation source, a subsystem for generating a radiation beam, a subsystem for moving the diamond, a decoding subsystem, wherein the detection system detects the optically permeable image inside the diamond by combinational (Raman) scattering distortion or by local distortion of the luminescence spectra of natural impurities due to local stresses of the crystal lattice caused by the presence of disturbances in the periodicity of the diamond crystal structure formed at vacancies and interstitials with the participation of chemical elements of impurities in the volume of micron or submicron size, and additionally comprises: a translucent mirror or polarizer; a subsystem for moving of the diamond configured to move along three spatial coordinates, and also to rotate around three spatial axes; a wavelength selective device for tuning to the wavelength; a photo detector; a control subsystem that controls the movement of diamond, and also scanning in the plane perpendicular to the optical axis to build an image of the mark.

An additional feature is that the reflection device is a translucent mirror or polarizer.

An additional feature is that the wavelength selective device is a monochromator.

An additional feature is that the optical radiation source that provides exciting radiation with a wavelength of 240 to 600 nm is present as a source of exciting radiation.

An additional feature is that said system comprises a laser with a power of 0.1 to 10 W as a source of exciting radiation.

The invention is illustrated by drawings:
Figure 1 is a marking system for implementing the method for creation of an optically permeable image inside a diamond;
Figure 2 is a cluster of defects;
Figure 3 is a detection system for implementing a method for detection by local rotation of polarization of light;
Figure 4 is a detection system for implementing the method (for detection) by local distortion of combinational (Raman) spectra and by distortion of fluorescence spectra of defects, some natural impurity present in the given crystal.

The natural, unfaceted surface of both natural and synthetic diamonds does not have optical quality, i.e. bumps, roughness, and relief are present. This does not allow laser radiation to be focused through it in the diamond volume; it does not make it possible to obtain a focal spot of good quality for marking. In addition, it is impossible to "see" the structures located inside the volume of the diamond through the rough relief surface of the diamond due to the fact that the surface refracts rays randomly, i.e. the image is blurred. A similar effect occurs on a faceted diamond (brilliant), in which radiation is refracted on many of its facets. In this case, an immersion composition is applied to the diamond surface selected in such a way that refractive index of the composition is close to the refractive index of the laser used in the marking system, or of the diamond itself, in the wavelength range close to the wavelength of the radiation source used in the detection system and to the wavelength emitted or scattered by the mark. Thus, in the process of creation of an optically permeable image, the equality of the refractive indices gives rise to the fact that the rays passing through the relief surface of the diamond do not experience refraction, and thus focus well in the volume of the diamond, and during the detection process, the rays no longer experience random refraction (or refraction is small) on the relief surface of the diamond, therefore it becomes possible to obtain an image of the mark previously recorded in its volume (and also of natural defects, inclusions, cracks, etc.). In this case, the input of the exciting radiation can also be made through the immersion composition.

Therefore, the claimed method for creation and detection of an optically permeable image according to the invention can be applied to create an image in faceted and uncut natural and synthetic diamonds. The image obtained using the method according to the invention can be made flat or three-dimensional, contain various flat or three-dimensional elements, for example, in the form of lines, shapes, letters, numbers, symbols consisting of optically permeable elements of micron or submicron size, located in the diamond in a certain given area, which are disturbances in the periodicity of the diamond crystal structure with the participation of chemical elements of impurities, at vacancies and interstitials in the volume of micron or submicron size, which are luminescent when exposed to radiation of certain wavelengths, or cause local distortion of combinational (Raman) spectra or luminescence spectra of any natural impurity present in the given crystal due to local stresses of the crystal lattice.

A method for creation and detection of an optically permeable image inside a diamond is as follows.

An immersion composition is applied to the diamond surface, selected in such a way that refractive index of the composition is close to the refractive index of the diamond at the wavelength of the laser used and marking is carried out through the composition.

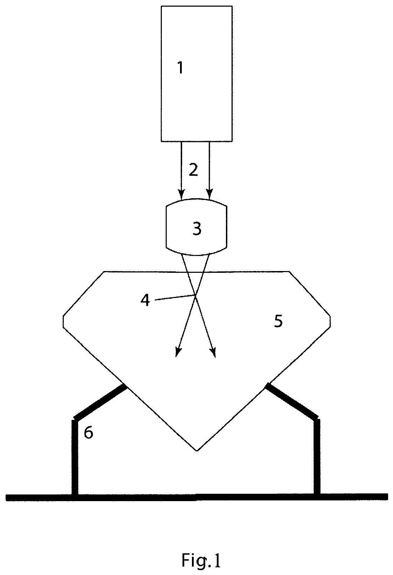

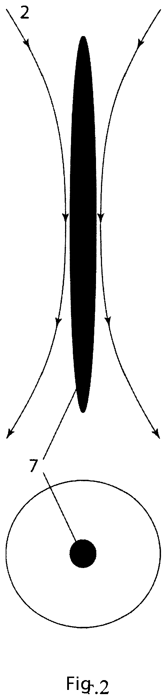

The laser 1 of the marking system (FIG. 1) generates working radiation 2 in the form of a train of pulses of duration from 30 fs to 10 ps, energy from 1 nJ to 40 µJ, and wavelength from 240 to 1800 nm, which is much lower than the fluence at which the transformation of diamond into graphite or another non-diamond form of carbon occurs. Said radiation is focused by a focusing system 3 (lens, objective) and creates a focal waist of a beam 4 in a focal plane inside the volume of a diamond 5, in which a polished optically transparent culet was previously made on the surface. The diamond 5 is mounted on a subsystem for moving and fixing 6, which subsystem is configured to move it along three spatial coordinates, and additionally two angular coordinates. Laser radiation 2 (FIG. 2) influence results in the formation of disturbances in the periodicity of the diamond crystal structure, including with the participation of chemical elements of impurities, in a volume of micron or submicron size 7, in the region of focus 4, i.e. where the intensity is maximum. The volume in which disturbances in the periodicity of the diamond crystal structure are made, including with the participation of chemical elements of impurities, represents an elementary pixel of the image, which is a mark. To achieve the desired luminescence intensity of the created disturbances in the periodicity of the diamond crystal structure with the participation of chemical elements of impurities, at vacancies and interstitials in the volume of micron or submicron size, the concentration of atomic defects in each created image is corrected by correcting the total integrated fluence of working ultrashort laser pulses in the location area of each specified volume with disturbances in the periodicity of the diamond crystal structure by increasing the number of pulses. In this case, macroscopic damage to the diamond does not occur, but the formation of an electron-hole plasma occurs, which heats up, partial breaking of interatomic bonds in the diamond is formed, and, as a result, disturbances in the periodicity of the diamond crystal structure appear, including with the participation of chemical elements of impurities. After a disturbance in the periodicity of the diamond crystal structure is formed at a given point inside the diamond, including with the participation of chemical elements of impurities, the subsystem for moving and fixing the diamond moves the diamond in space, in accordance with a digital model of the image recorded in the volume of the crystal entered by user. Thus, the focal plane is moved to a new location inside the diamond crystal, after which the above operations are repeated.

The created image is detected by local rotation of polarization of light, or by local distortion of the combinational (Raman) scattering spectra of the image previously created in the crystal, or by local distortion of the fluorescence spectra of some natural impurity present in said crystal, or by the luminescence of atomic strains of the crystal lattice caused by the presence of disturbances in the periodicity of the diamond crystal structure formed at vacancies and interstitials with the participation of chemical elements of impurities in the volume of micron or submicron size.

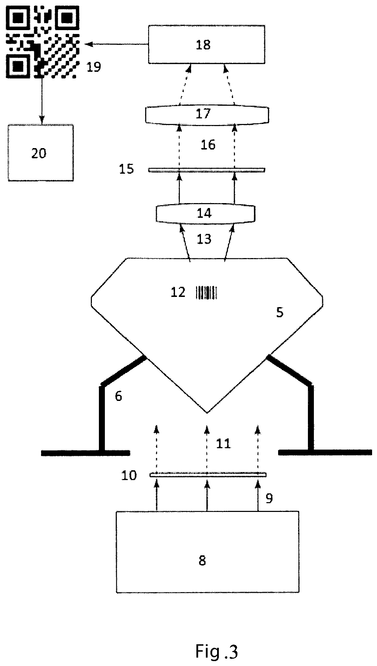

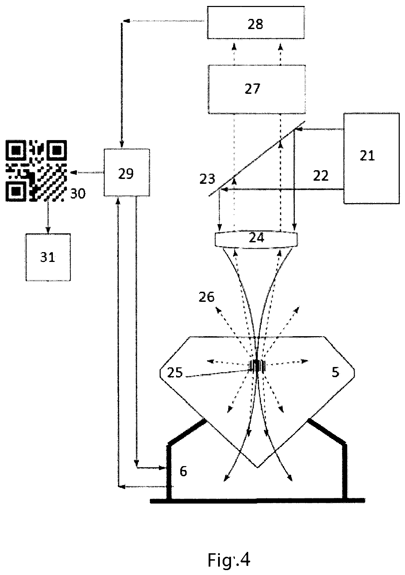

A detection system (FIG. 3, 4) allows to read information previously recorded in the diamond.

The detection system (FIG. 3) for implementing the method for detection by local rotation of polarization of light comprises a backlight radiation source 8, for example, a lamp with a condenser emitting a beam of unpolarized radiation 9. After passing through a polarizer 10, backlight radiation 11 becomes polarized (acquires a linear polarization). Instead of the backlight radiation source and polarizer, a linearly polarized radiation source, such as a laser, can be used. The radiation 11 passes through the diamond 5 (the course of the rays is shown schematically). The diamond 5 is mounted on a system for moving 6, which provides moving it in space along three coordinates (optionally additionally on one, two or three axes).

In the areas of clusters of the mark 12, the plane of polarization of the backlight radiation rotates due to local stresses of the crystal lattice caused by the presence of disturbances in the periodicity of the diamond crystal structure, including with the participation of chemical elements of impurities, as a result of which the radiation 13 emerging from the crystal has components with polarization other than linear. The radiation 13 passes through an objective lens 14 and a polarizer (analyzer) 15, which again converts the radiation into a linearly polarized one 16. The polarizer (analyzer) 15 is configured to rotate around the optical axis of the system. The image forming system 17 (objective lens) builds an image of the fluorescent mark on the sensor (matrix) of the camera 18. Depending on the angle of rotation of the polarizer (analyzer) 15, the areas of the clusters of mark are displayed on the matrix in the form of darker or brighter areas. If necessary, the angle of rotation of the polarizer (analyzer) 15 is tuned in order to obtain the maximum contrast image.

The image 19 from the camera 18 is decoded by a decoding system 20, the output of which receives information encoded in the mark.

If the cross-sectional size of the backlight radiation beam is less than the size of the mark, then a scan is performed by moving the diamond using the subsystem for moving 6 in a plane perpendicular to the direction of propagation of the backlight radiation beam and the image is stitched together.

The detection system (FIG. 4) for implementing the method for detecting by local distortion of combinational (Raman) spectra, by local distortion of the fluorescence spectra of some natural impurity present in the given crystal comprises a laser 21 generating exciting radiation 22 (wavelength from 240 to 600 nm, power from 0.01 to 1 W), which is reflected from a translucent mirror 23 (or polarizer, e.g., a Glan prism, etc.) and is focused by a focusing system 24 inside the diamond 5, mounted on the subsystem for moving 6, which provides moving it in space along three coordinates (optionally additionally on one, two or three axes) to a focal waist 25. In this case, the transverse size of the focal waist is of the order of the transverse size of the mark cluster. In the focus region, the exciting radiation undergoes combinational (Raman) scattering, as a result of which scattered radiation 26 is emitted.

Part of the scattered radiation is collimated by the focusing subsystem 24, passes through the translucent mirror 23, then passes through a device selective for wavelengths (for example, a monochromator) 27. The device 27 is selected (tuned) to a wavelength such that radiation scattered by the unperturbed crystal (i.e., an element of a volume in which there are no disturbances in the periodicity of the diamond crystal structure) passes through it.

After the device 27, the radiation is detected by a photo detector 28, for example, a PMT comprising an analog-to-digital converter (gives a very high sensitivity, dynamic range). An electrical signal from the photo detector 28 is supplied to a control subsystem 29. The control subsystem 29 controls the movement of the crystal, mounted on the subsystem for moving and fixing 6, while scanning in the area of the crystal volume. If the scattering comes from the "clean" volume of the crystal, the photo detector 28 detects the radiation that has passed through the device 27. If the scattering comes from a cluster of defects, the wavelength of the scattered radiation is shifted due to local stresses in the crystal caused by a disturbance in the periodicity of the diamond crystal structure, including with the participation of chemical elements of impurities, formed at vacancies and interstitials in the volume of micron or submicron size. In this case, the device 27 does not transmit radiation. Thus, during scanning, the control system builds (maps) an image of the mark 30, which is decoded by a decoding system 31, at the output of which information encoded in the mark is obtained.

Alternatively (by distorting the fluorescence spectra of some natural impurity present in the given crystal), the device 27 is tuned to the fluorescence wavelength of some natural (naturally occurring) impurity present in the given crystal. In mark clusters, this wavelength also is shifted due to local stresses caused by the presence of a disturbance in the periodicity of the diamond crystal structure, including with the participation of chemical elements of impurities formed at vacancies and interstitials in the volume of micron or submicron size, and the mapping of the mark is made according to the same principle.

The images created in diamond crystals by the method described above from given sets of optically permeable elements of micron or submicron size are invisible to the naked eye, through magnifying glasses, as well as in any optical and electronic microscopes, since the concentration of disturbances in the periodicity of the diamond crystal structure, with the participation of chemical elements of impurities, in the volume of micron or submicron size, i.e. vacancies, interstitials, and their derivatives, in the marks is relatively small, and the size of the mark itself is small. In this case, the image created from the sets of optically permeable elements of micron or submicron size is located in the depth of the crystal, and therefore cannot be removed by polishing. There are no known methods for the complete elimination of disturbances in the periodicity of the diamond crystal structure with the participation of chemical elements of impurities formed at vacancies and interstitials in the volume of micron or submicron size, and also of all their possible derivatives in diamond crystal, without destruction or damage to the crystal itself. Thus, an image consisting of a disturbance in the periodicity of the diamond crystal structure with the participation of chemical elements of impurities formed at vacancies and interstitials in the volume of micron or submicron size is a reliable signature of the diamond and a reliable record of information.

The method for creation of optically permeable images inside a diamond can be used to create permanent marking of diamonds, including secret one, for their subsequent identification and tracking, without changing their appearance and without reducing their commercial value, and also for recording and storing information inside diamond crystals. The method can be implemented in devices for creation of optically permeable images according to the invention, which are made using known structural elements and apparatus. Created images can be detected using detection systems according to the invention.

## Claims

1. A method for creation of an optically permeable image inside a diamond, in which the image is created under the surface of the diamond, which image consists of a given set of optically permeable elements of micron or submicron size, which elements are disturbances in the periodicity of the diamond crystal structure, wherein the image created in the diamond is a mark consisting of the given set of optically permeable elements of micron or submicron size, which elements are disturbances in the periodicity of the diamond crystal structure with the participation of chemical elements of impurities formed at vacancies and interstitials in the volume of micron or submicron size, and wherein the formation of disturbances in the periodicity of the diamond crystal structure is carried out by treatment of the diamond with optical radiation focused in a focal region located in the area of the expected location of disturbances in the periodicity of the diamond crystal structure, with the supply of ultrashort radiation pulses providing the formation of the given set of optically permeable elements of micron or submicron size formed at vacancies and interstitials in the specified focal region, wherein an integrated fluence below the threshold fluence at which local transformation of the diamond into graphite or other non-diamond form of carbon occurs, or cracks, slits are formed in the crystal, is provided in the specified focal region.

2. The method according to claim 1, wherein before treatment of the diamond with said optical radiation, its surface is cleaned of contaminants and an immersion composition is applied, which composition is selected in such a way that refractive index of the composition is close to the refractive index of the diamond in the wavelength range close to the wavelength of the laser used.

3. The method according to claim 2, wherein the immersion composition is applied to both treated and untreated diamond.

4. The method according to claim 1, wherein a marking system is used to create the optically permeable image inside the diamond, which system comprises a laser generating working radiation in the form of a train of pulses, a focusing subsystem configured to create a focal waist of the radiation beam inside the diamond volume, and a subsystem for moving configured to move along three spatial coordinates.

5. The method according to claim 4, wherein the working radiation used is a radiation in the form of ultrashort laser pulses of duration of 30 fs to 10 ps and energy of 1 nJ to 40 µJ with a wavelength of 240 to 1800 nm.

6. The method according to claim 4, wherein an optical radiation source that provides exciting radiation with a wavelength of 240 to 600 nm is comprised as a source of exciting radiation.

7. The method according to claim 1 and claim 4, wherein an image element having dimensions in the range from 0.5 to 20.0 µm at a depth of more than 100 µm is created, and wherein radiation in the form of ultrashort laser pulses focused in the focal region having dimensions in the range from 0.5 to 20.0 microns is used for treatment, respectively.

8. A method for detection of an optically permeable image inside a diamond by local rotation of polarization of light consisting of:
- generating non-polarized backlight radiation;
- converting said radiation to a linearly polarized one, which is passed through the diamond, mounted on a subsystem for moving;
- carrying out the rotation of the polarization of the backlight radiation;
- converting the radiation obtained, which is coming out of the diamond and having a polarization other than linear, due to local stresses of the crystal lattice caused by the presence of disturbances in the periodicity of the diamond crystal structure, to a linearly polarized one;
- building an image on the sensor of the matrix from the previously created set of optically permeable elements of micron or submicron size, which are disturbances in the periodicity of the diamond crystal structure with the participation of chemical elements of impurities formed at vacancies and interstitials in the volume of micron or submicron size;
- decoding the information encoded in the given set of optically permeable elements of micron or submicron size in the diamond;
- forming of an image on the basis of the information obtained.

9. A method for detection of an optically permeable image inside a diamond by combinational (Raman) scattering distortion or by local distortion of the luminescence spectra of natural impurities, consisting in:
- generating exciting radiation;
- focusing said radiation inside the diamond mounted on a subsystem for moving into a focal waist, the transverse dimension of which is of the order of the transverse size of the previously created image;
- collimating the portion of the scattered radiation emitted by optically permeable elements of micron or submicron size in the diamond, which are disturbances in the periodicity of the diamond crystal structure with the participation of chemical elements of impurities formed at vacancies and interstitials in the volume of micron or submicron size;
- tuning a wavelength selective device in such a way that radiation scattered by unperturbed part of the diamond does not pass through it, or to the wavelength of the natural (naturally occurring) impurity present in the given diamond;
- registering the radiation obtained;
- moving the diamond, mounted on the subsystem for moving, while scanning in a plane perpendicular to the optical axis;
- mapping the image obtained after scanning;
- decoding the information encoded in the given set of optically permeable elements of micron or submicron size in the diamond;
- forming of an image on the basis of the information obtained.

10. A system for detecting an optically permeable image inside a diamond, which system comprises a radiation source, an image forming subsystem, a decoding subsystem, a subsystem for moving the diamond, wherein said system detects the optically permeable image inside the diamond by local rotation of polarization of light when the previously created image consisting of a given set of optically permeable elements of micron or submicron size, which are disturbances in the periodicity of the diamond crystal structure with the participation of chemical elements of impurities formed at vacancies and interstitials in the volume of micron or submicron size, is exposed to polarized radiation, wherein the radiation source is configured to generate non-polarized radiation, and the system additionally comprises:
- the first polarizer converting the radiation received from the radiation source to a linearly polarized radiation;
- an objective lens;
- the second polarizer converting radiation obtained from disturbances in the periodicity of the diamond crystal structure with the participation of chemical elements of impurities formed at vacancies and interstitials in the volume of micron or submicron size in the diamond and having components with a polarization other than linear, to a linearly polarized one, and also is configured to rotate around the optical axis of the system;
- a subsystem for moving the diamond, which implements moving along three spatial coordinates, and also rotating around three spatial axes.

11. The system according to claim 10, wherein a lamp with a condenser can be used as a source of backlight radiation.

12. The system according to claim 10, wherein depending on the angle of rotation of the second polarizer, the areas of the clusters of defects are displayed on the sensor in the form of darker or brighter regions.

13. A system for detection of an optically permeable image inside a diamond, which system comprises a radiation source, a subsystem forming a radiation beam, a subsystem for moving the diamond, a decoding subsystem, wherein said system detects the optically permeable image inside the diamond by combinational (Raman) scattering distortion or by local distortion of the luminescence spectra of natural impurities due to local stresses of the crystal lattice caused by the presence of disturbances in the periodicity of the diamond crystal structure formed at vacancies and interstitials with the participation of chemical elements of impurities in a volume of micron or submicron size, and additionally comprises:
- a translucent mirror or polarizer;
- a subsystem for moving the diamond, configured to move along three spatial coordinates, and also to rotate around three spatial axes;
- a wavelength selective device for tuning to the wavelength;
- a photo detector;
- a control subsystem that controls moving of the diamond, and also scanning in the plane perpendicular to the optical axis to build an image of the mark.

14. The system of claim 13, wherein the reflection device is a translucent mirror or polarizer.

15. The system of claim 13, wherein the wavelength selective device is a monochromator.

16. The system according to claim 13, wherein said system comprises an optical radiation source that provides exciting radiation with a wavelength of 240 to 600 nm as the source of exciting radiation.

17. The system according to claim 13, wherein said system comprises a laser with a power of 0.1 to 10 W as the source of exciting radiation.
